(19) Europäisches Patentamt
European Patent Office
Office européen des brevets

(11) **EP 1 227 599 A2**

(12) **EUROPÄISCHE PATENTANMELDUNG**

(43) Veröffentlichungstag:
   **31.07.2002  Patentblatt 2002/31**

(51) Int Cl.[7]: **H04B 3/54**

(21) Anmeldenummer: **01811135.1**

(22) Anmeldetag: **23.11.2001**

(84) Benannte Vertragsstaaten:
   **AT BE CH CY DE DK ES FI FR GB GR IE IT LI LU MC NL PT SE TR**
   Benannte Erstreckungsstaaten:
   **AL LT LV MK RO SI**

(30) Priorität: **20.12.2000  DE 10063538**

(71) Anmelder: **Ascom Energy Systems AG**
   **3000 Bern 14 (CH)**

(72) Erfinder:
   • **Bettenwort, Gert**
     **33098 Paderborn (DE)**

   • **Pohlmann, Robert**
     **59071 Hamm (DE)**
   • **Ortjohann, Egon, Prof.Dr.-Ing.**
     **37691 Hoxter (DE)**

(74) Vertreter: **Roshardt, Werner Alfred, Dipl.-Phys.**
   **Keller & Partner**
   **Patentanwälte AG**
   **Schmiedenplatz 5**
   **Postfach**
   **3000 Bern 7 (CH)**

(54) **Verfahren zur Datenübertragung in Wechselstromnetzen**

(57)    Damit die Installation aufwendiger Überwachungsnetzwerke zur Überwachung der Funktionsfähigkeit von an ein Wechselstromnetz (5) angekoppelten Wechselrichtern, insbesondere von dezentral angeordneten, jeweils einen Wechselrichter (1) aufweisenden photovoltaischen Modulen zur Einspeisung von Wechselstrom in ein Wechselstromnetz (5), vermieden werden kann, weist jeder Wechselrichter eine Signalstromsteuereinheit auf und ist mit einer zentralen Empfangseinheit gekoppelt, wobei das Verfahren zur Überwachung der Funktionsfähigkeit der Wechselrichter folgende Schritte umfasst:

a) in jedem Wechselrichter (1) wird in Abhängigkeit von der Signalstromsteuereinheit innerhalb eines bestimmten Zeitraums mindestes einmal ein den Wechselrichter (1) identifizierender Signalstrom dem in das Wechselstromnetz (5) einzuspeisenden Wechselstrom überlagert;

b) die Empfangseinheit filtert die Signalströme aus dem in das Wechselstromnetz (5) einzuspeisenden Wechselstrom heraus und überprüft, ob von jedem der an die Empfangseinheit gekoppelten Wechselrichter (1) innerhalb des bestimmten Zeitraums ein Signalstrom empfangen worden ist,

c) die Empfangseinheit zeigt einen vermutlichen Fehler eines der Wechselrichter (1) an, wenn nach Ablauf des bestimmten Zeitraums kein Signal von diesem Wechselrichter (1) empfangen worden ist.

Figur 1

## Beschreibung

### Technisches Gebiet

Die Erfindung betrifft ein Verfahren zur Übertragung von Daten in Wechselstromnetzen. Sie betrifft insbesondere auch ein Verfahren zur Überwachung der Funktionsfähigkeit von an ein Wechselstromnetz angekoppelten, einen Wechselrichter aufweisenden elektrischen Betriebsmitteln, insbesondere von einem oder mehreren dezentral angeordneten, einen Wechselrichter aufweisenden photovoltaischen Modulen. Ferner bezieht sich die Erfindung auf eine Einrichtung zur Durchführung des Verfahrens sowie auf Wechelrichter und eine Empfangseinheit für eine solche Einrichtung.

### Stand der Technik

Bei photovoltaischen Anlagen, die an ein Wechselstromnetz, insbesondere an ein öffentliches Versorgungsnetz, angekoppelt sind und in dieses einen Wechselstrom einspeisen, muss der in einer Vielzahl von photovoltaischen Modulen erzeugte Gleichstrom in einen Wechselstrom gewandelt werden. Der einzuspeisende Wechselstrom muss dabei mit der Grundfrequenz des Wechselstromnetzes schwingen, damit er problemlos in das Wechselstromnetz eingespeist werden kann. In bezug auf das Wechselrichten des Gleichstroms unterscheidet man dabei grundsätzlich zwischen zwei Konzepten. Während bei Verwendung eines zentralen Wechselrichters alle photovoltaischen Module einer photovoltaischen Anlage mit diesem gekoppelt sind, so dass der gesamte von der photovoltaischen Anlage erzeugte Strom an einer zentralen Stelle von Gleichstrom zu Wechselstrom gewandelt wird, weist bei dem Konzept modulintegrierter Wechselrichter jedes photovoltaische Modul einen eigenen Wechselrichter auf, so dass der erzeugte Strom dezentral in Wechselstrom gewandelt wird.

Mit dem Konzept modulintegrierter Wechselrichter wird die Idee verfolgt, die Planung sowie die Installation bei gleichzeitiger Reduktion der Systemkosten zu erleichtern. Kernstück dieses Systemkonzeptes ist ein Wechselrichter kleiner Leistung, mit dessen Einbindung in ein photovoltaisches Modul sich Einheiten mit einer Leistung von zur Zeit bis zu 400 W, insbesondere von 100 bis 150 W, ergeben. Diese Leistungsangabe ergibt sich aus den derzeit marktgängigen Modulgrössen.

Ein Nachteil des Konzepts modulintegrierter Wechselrichter besteht darin, dass diese je nach Anordnung des photovoltaischen Moduls schlecht zugänglich installiert sind. Daher ist eine möglichst zentrale Überwachung der Vielzahl dezentral angeordneten Wechselrichter unabdingbar.

Als Verfahren zur Übertragung von Daten in kommunalen Netzen werden insbesondere Tonfrequenzverfahren verwendet, bei denen die Trägerfrequenz im Bereich von 167 Hz bis 3 kHz liegt. Nachteile der verwendeten Verfahren besteht darin, eine vergleichsweise aufwendige Senderelektronik zur Datenübertragung benötigt wird, und das bei einer Vielzahl von in das gleiche Netz einspeisenden Sendern die Kommunikation zwischen Sendern und Empfängern unzuverlässig wird.

Aus der DE 40 32 569 A1 ist ein Verfahren zur Überwachung der Funktionsfähigkeit von mehreren, an ein Wechselstromnetz angekoppelten, jeweils einen Wechselrichter aufweisenden photovoltaischen Modulen zur Einspeisung von Wechselstrom in das Wechselstromnetz bekannt. Jeder Wechselrichter weist eine Steuereinheit auf und ist mit einer zentralen Empfangseinheit über einen separaten Datenbus gekoppelt, um die Informationen zu übermitteln.

Die DE 195 29 751 A1 beschreibt ein Verfahren zur zentralen Überwachung der Funkton von elektrischen Verbrauchern, bei dem die Verbraucher über Überwachungsmodule mit Versorgungsleitungen verbunden sind. Die Versorgungsleitungen sind über eine zentrale Überwachungseinrichtung mit den Netzleitungen eines Wechselspannungsnetzes verbunden. Zur Überprüfung der Verbraucher wird vorgeschlagen, dass der Strom der Versorgungsleitungen durch die zentrale Überwachungseinrichtung kurz unterbrochen wird. Diese Stromunterbrechung wird von den Überwachungsmodulen detektiert, die daraufhin einen Funktionstest des Verbrauchers durchführen und einen Stromimpuls über die Versorgungsleitungen an die zentrale Überwachungseinrichtung senden.

### Darstellung der Erfindung

Somit besteht eine erste Aufgabe der vorliegenden Erfindung darin, ein Verfahren der eingangs genannten Art zu schaffen, mit dem der Betrieb sowie eventuelle Ausfälle von Wechselrichtern möglichst einfach detektiert werden können.

Gelöst wird diese Aufgabe dadurch, dass jeder Wechselrichter eine Signalstromsteuereinheit aufweist und mit einer zentralen Empfangseinheit gekoppelt ist und das Verfahren folgende Schritte umfasst:

a) in jedem Wechselrichter wird in Abhängigkeit von der Signalstromsteuereinheit innerhalb eines bestimmten Zeitraums mindestes einmal ein den Wechselrichter identifizierender Signalstrom dem in das Wechselstromnetz einzuspeisenden Wechselstrom überlagert;

b) die Empfangseinheit filtert die Signalströme aus dem in das Wechselstromnetz einzuspeisenden Wechselstrom heraus und überprüft, ob von jedem der an die Empfangseinheit gekoppelten dezentralen Wechselrichter innerhalb des bestimmten Zeitraums ein Signalstrom empfangen worden ist,

c) die Empfangseinheit zeigt einen vermutlichen Fehler eines der Wechselrichter an, wenn nach des bestimmten Zeitraums kein Signal von dem Wechselrichter empfangen worden ist.

Der Kerngedanke dieses ersten Aspekts der Erfindung besteht darin, die Überwachungsinformationen in Form eines Signalstroms über den in das Wechselstromnetz einzuspeisenden Wechselstrom zu übertragen. Der Wechselrichter wird dabei nicht nur als Leistungsteil, sondern auch als Sender verwendet werden, er bekommt somit eine Doppelfunktion. Dabei eignet sich ein Wechselrichter insbesondere dann als Sender, wenn eine niederfrequente Übertragung des Signalstroms aufgrund einer niedrigen Trägerfrequenz, beispielsweise der Netzfrequenz des kommunalen Wechselstromnetzes verwendet werden kann.

Wird der zu überwachende Wechselrichter selbst als Sender eingesetzt, liegt bereits aufgrund der Tatsache, dass innerhalb eines bestimmten Zeitraums von der Empfängereinheit kein Signalstrom empfangen wird, die Vermutung nahe, dass der Wechselrichter oder eine damit verbundene Komponente defekt ist. Umgekehrt ergibt sich aus der Tatsache, dass die Empfängereinheit einen Signalstrom vom Wechselrichter erhält, dass der Wechselrichter funktionsfähig ist. Im ersten Fall sollte der Wechselrichter oder die mit ihm in Verbindung stehenden Teile eines Moduls vor Ort untersucht werden, wobei der Ort des Wechselrichters aufgrund seiner eindeutigen Identifizierungskennung leicht zu ermitteln ist, sofern seine Position bei der Installation der Wechselrichter ausreichend dokumentiert wurde.

Das erfindungsgemässe Verfahren weist eine Vielzahl von besonderen Vorteilen auf. Aufgrund der Doppelfunktion des Wechselrichters als Leistungsteil und als Sendereinheit ist die Installation eines Überwachungssystems ohne grossen Mehraufwand realisierbar. Insbesondere fällt kein zusätzlicher Verkabelungsaufwand zur Übertragung von Informationen über den Zustand der Wechselrichter, beispielsweise über Modems, an. Somit entfallen sämtliche Kosten für die Installation eines Überwachungsnetzwerkes. Auch der zusätzliche elektronische Aufwand im Hinblick auf die mit den Wechselrichtern zu verbindenden Sendeeinheiten und die damit anfallenden Zusatzkosten sind gering. Des weiteren ist die zusätzliche Leistungsaufnahme einer Sendereinheit zur Erzeugung des Signalstroms gering, da auf zusätzliche Modems oder Transformatoren zur galvanisch getrennten Einkopplung der Signale verzichtet werden kann.

Im Unterschied zum Stand der Technik werden die Signale direkt von den Wechselrichtern an die zentrale Empfangseinheit gesandt. Die Besonderheit liegt dabei nicht nur darin, dass eine andere Signalstrecke und ein anderes Signalübertragungsverfahren verwendet werden, sondern auch darin, dass der Sender integraler Bestandteil des zu überprüfenden elektrischen Betriebsmittels ist und das Senden von Signalen alleine schon eine Information darüber darstellt, dass der sendende Wechselrichter funktionstüchtig ist.

In einer bevorzugten Ausgestaltung des Verfahrens wird der Signalstrom mit der Frequenz einer ungeraden Harmonischen der Grundschwingung des Wechselstromnetzes, insbesondere der dritten Harmonischen der Grundschwingung, überlagert.

Da somit die einzelnen Wechselrichter prinzipbedingt keine Blindströme in das Wechselstromnetz einspeisen und der eingespeiste Strom nicht negativ werden kann, solange die Netzspannung noch positiv ist, kann der Signalstrom dem Wechselstrom ohne weiteres überlagert werden.

Insbesondere bietet sich die 3. Harmonische der Grundschwingung des Netzstroms an, da hier gemäss EN60555 Teil 2 die höchste Amplitude der Oberschwingungsströme von 2,3 A (vgl. Tabelle 1) zulässig ist.

Ausserdem erfolgt die Übertragung des Signalstroms bei Überlagerung von ganzzahligen Harmonischen zur Signalübertragung leistungsneutral, da die Wirkleistung gleich bleibt.

Tabelle 1:

| Auszug der Grenzwerte der Oberschwingungen gemäss [EN60555, Teil 2] | |
| --- | --- |
| Ordnungszahl n | maximal zulässiger Oberschwingungsstrom in A |
| ungeradzahlige Oberschwingungen | |
| 3 | 2,30 |
| 5 | 1,14 |
| 7 | 0,77 |
| 9 | 0,40 |
| 11 | 0,33 |
| 13 | 0,21 |

Tabelle 1: (fortgesetzt)

| Auszug der Grenzwerte der Oberschwingungen gemäss [EN60555,Teil 2] | |
|---|---|
| Ordnungszahl n | maximal zulässiger Oberschwingungsstrom in A |
| ungeradzahlige Oberschwingungen | |
| $15 \leq n \leq 39$ | 0,15 (15/n) |

Des weiteren ist es von Vorteil, wenn der Signalstrom gleichgerichtet ist und in einer ersten Wechselrichterstufe des Wechselrichters einem gepulsten Gleichstrom überlagert wird. Der gepulste Gleichstrom weist bereits die Frequenz der Grundschwingung des Wechselstromnetzes auf. Zur Umwandlung in einen Wechselstrom wird dann nur noch die Polarität jeder zweiten Halbwelle in einer zweiten Wechselrichterstufe angepasst. Der Vorteil liegt darin, dass die Polarität des Stroms in jeder Halbwelle eindeutig gerichtet ist, es also keine Richtungsänderungen durch eine überlagerte Oberschwingung geben kann.

Grundsätzlich sind Kollisionen der gesendeten Signalströme in Form von Überlappungen der Sendefrequenzen schwer auszuschliessen. Solche Überlappungen können insofern auftreten, als die Wechselrichter lediglich die Funktion eines Senders übernehmen, nicht aber die Funktion eines Empfängers, so dass sie nicht untereinander synchronisiert werden können. Insofern ist es von Vorteil, wenn in einer weiteren Ausgestaltung des Verfahrens der Zeitpunkt zum Senden eines Signalstroms durch einen in der Sendeeinheit enthaltenen Zufallsgenerator bestimmt wird. Aufgrund der zufälligen Auswahl der Sendezeiten wird sich eine gleiche Kollision von gleichzeitig oder überlappend gesendeten Signalströme zweier oder mehrerer Wechselrichter mit grosser Wahrscheinlichkeit nicht in der gleichen Art mehrfach hintereinander wiederholen. Nicht regelmässig auftretende Datenkollisionen können aber für den Anwendungsfall der Überwachung der Funktionsfähigkeit von Wechselrichtern ohne weiteres toleriert werden.

In einer besonders einfachen Ausgestaltung des Verfahrens wird der Signalstrom aus einem digitalen Signal serieller Daten erzeugt, indem der Signalstrom während der Dauer einer Grundschwingung entsprechend einer logischen 1 oder 0 entweder zu- oder abgeschaltet wird. Im Gegensatz zu einer tonfrequenten Datenübertragung, bei der verschiedene Tonfrequenzen einer bestimmten Information entsprechen, wird in dieser Ausgestaltung des erfindungsgemässen Verfahrens die Information monofrequent in Form serieller Einsen und Nullen übertragen. Hierdurch ergeben sich erhebliche Vereinfachungen im technischen Aufbau eines Senders.

Zur Erhöhung der Übertragungssicherheit kann jedes zu übertragene Bit des digitalen Signals in mehrere, insbesondere sieben, Chips aufgespreizt werden, wobei die Übertragung eines Chips genau eine Periode der Grundschwingung des Wechselstromnetzes dauert. Beispielsweise kann die Chipfolge 1000110 einer logischen 1 entsprechen, während die Negation dieser Chipfolge 0111001 einer logischen 0 entspricht. Die Verwendung einer solchen Aufspreizung der digitalen Signale hat den Vorteil, dass man eine logische 0 bzw. eine 1 eindeutig von einer Sendepause unterscheiden kann.

Es können aber auch andere Signalkodierungsverfahren zur Datenübertragung verwendet werden. Beispielsweise kann man eine Sendepause von einer zu sendenden Datenfrequenz auch dadurch unterscheidbar machen, dass vor der zu übertragenden Sendesequenz und unmittelbar danach ein den Anfang bzw. das Ende der Sendesequenz kennzeichnendes Synchronisationssignal gesendet wird. Es ist von Vorteil, wenn das Signal einen für den Wechselrichter spezifischen, digitalen Identifizierungscode sowie gegebenenfalls ein zusätzliches Datenwort enthält. Dabei sollten die mit einer Sendeeinheit ausgestatteten Wechselrichter "ab Werk" mit einem eindeutigen Identifizierungscode derart ausgestattet sein, dass mindestens jeder Wechselrichter einer Jahresproduktion eine individuelle Nummer erhält. So besteht eine vergleichsweise hohe Sicherheit, dass nicht gleichzeitig zwei Wechselrichter mit dem gleichen Identifizierungscode innerhalb der gleichen photovoltaischen Anlage installiert sind. Mit dem Datenwort können zusätzliche Informationen versendet werden, beispielsweise Messwerte über den am Wechselrichterausgang anliegenden Strom oder die Spannung.

Eine zweite Aufgabe der vorliegenden Erfindung besteht darin, eine möglichst leistungsneutrale und einfache Art der Datenübertragung in Wechselstromnetzen zu schaffen.

Diese zweite Aufgabe wird gelöst mit einem Verfahren zur Datenübertragung in einem Wechselstromnetz von einem elektrischen Betriebsmittel mit einem Signalgeber an eine Auswerteeinheit, bei dem das zu übertragende Signal als ganzzahlige, insbesondere 3., Harmonische dem Wechselstrom überlagert wird.

Da bei einer solchen erfindungsgemässen Art der Datenübertragung die Wechselstromfrequenz als Trägerfrequenz verwendet wird, muss kein zusätzliches Trägerfrequenzsignal erzeugt werden. Somit kann auf eine entsprechende Leistungselektronik verzichtet werden. Auch wird aufgrund des Verzichts auf eine zusätzliche Trägerfrequenz die Leistung im Wechselstromnetz während der Datenübertragung nicht oder nur unwesentlich angehoben, die Übertragung erfolgt weitestgehend leistungsneutral. Dies ist insofern von Vorteil, als es keiner Zustimmung des Netzbetreibers bei der Verwendung des Verfahrens in einem öffentlichen Wechselstromnetz bedarf.

Für dieses Verfahren gelten die zuvor beschriebenen vorteilhaften Ausgestaltungen entsprechend.

**Kurze Beschreibung der Zeichnungen**

Im folgenden wird das erfindungsgemässe Verfahren anhand von Figuren, die ein mögliches Ausführungsbeispiel einer Sendereinheit und einer Empfängereinheit zeigen, näher erläutert. Es zeigen

Fig. 1 ein Schaltbild einer an einen Wechselrichter angekoppelten Sendereinheit, und
Fig. 2 ein Schaltbild mit einer Vielzahl von netzgekoppelten Wechselrichtern,
Fig. 3 ein Schaltbild einer mit den Wechselrichtern gekoppelten Empfangseinheit.

**Wege zur Ausführung der Erfindung**

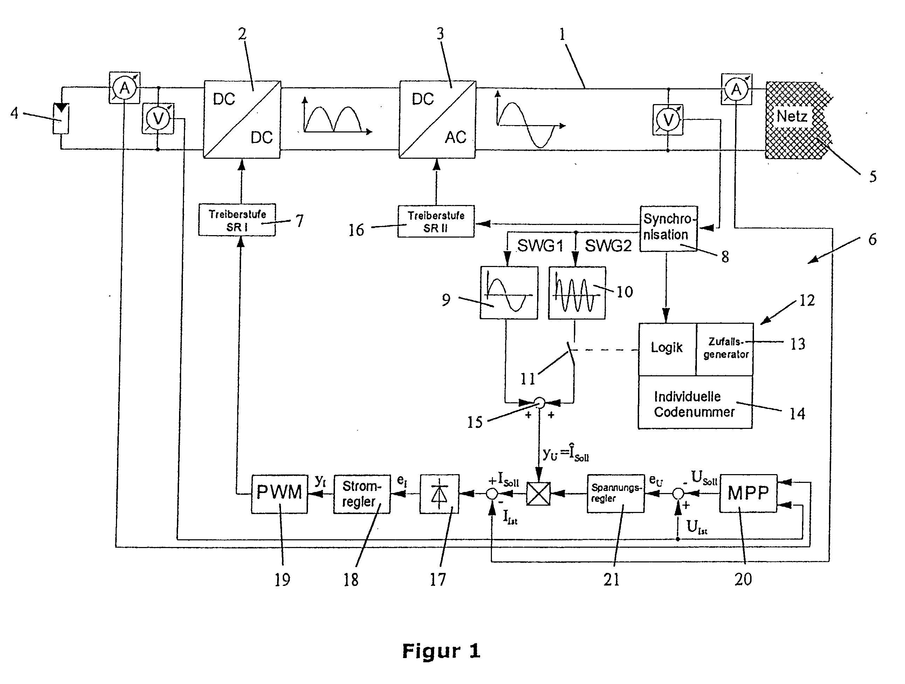

Der in Figur 1 dargestellte Wechselrichter (1) weist eine erste Wechselrichterstufe (2) und eine zweite Wechselrichterstufe (3) auf, die den von einer photovoltaischen Zelle (4) gelieferten Gleichstrom in einen Wechselstrom wandeln, der mit der Frequenz der Grundschwingung eines Wechselstromnetzes (5) in dieses eingespeist wird. Dabei wird der von der photovoltaischen Zelle (4) gelieferte Gleichstrom von der ersten Wechselrichterstufe (2) in einen in der Frequenz der Grundschwingung des Wechselstromnetzes gepulsten Gleichstrom gewandelt. Der gepulste Gleichstrom wird dann von der zweiten Wechselrichterstufe (3) in den in das Wechselstromnetz einzuspeisenden Wechselstrom gerichtet, indem die Polarität jeder zweiten Halbschwingung umgekehrt wird.

Dem gepulsten Gleichstrom wird in der ersten Wechselrichterstufe (2) ein Signalstrom aufmoduliert. Hierzu ist eine Signalstromsteuereinheit (6) vorgesehen, deren Steuersignal über eine erste Treiberstufe (7) die erste Wechselrichterstufe (3) so steuert, dass entsprechend dem Steuersignal eine oder mehrere Oberwellen dem gepulsten Gleichstrom überlagert werden und somit ein Signalstrom dem gepulsten Gleichstrom aufmoduliert wird.

Die Signalstromsteuereinheit (5) umfasst ein mit dem Wechselstromnetz (5) gekoppeltes Synchronisationsmodul (8), einen ersten Frequenzgenerator (9), einen zweiten Frequenzgenerator (10) sowie eine Schaltereinheit (11), die von einer Logikeinheit (12) gesteuert wird. Die Logikeinheit (12) umfasst einen Zufallsgenerator (13) und einen Datenspeicher (14) zur Speicherung mindestens einer individuellen Codenummer.

Der erste Frequenzgenerator (9) erzeugt ein in der Grundschwingung des Wechselstromnetzes schwingendes Basissignal, der zweite Frequenzgenerator (10) eine Oberschwingung als 3. Harmonische der Grundschwingung, wobei beide Frequenzgeneratoren über das Synchronisationsmodul (8) mit der Grundfrequenz des Wechselstromnetzes (5) synchronisiert sind. Die Synchronisation erfolgt dabei über die am Ausgang des Wechselrichters (1) anliegende Wechselspannung.

Mit der Signalstromsteuereinheit wird ein normiertes Steuersignal für den in der ersten Wechslerstufe (2) zu richtenden Strom erzeugt, der sich aus der Addition der Grundschwingung und der möglicherweise zugeschalteten Oberschwingung am Summationsglied (15) ergibt. Zu welchem Zeitpunkt und in welcher Sequenz die Oberwelle zugeschaltet wird, wird von der Logikeinheit (12) gesteuert. Der Zeitpunkt, ab wann die Schaltereinheit (11) innerhalb eines bestimmten Zeitraums, der beispielsweise 24 Stunden betragen kann, erstmalig die Oberwelle aufschaltet, wird dabei von dem Zufallsgenerator (13) bestimmt. Die sich daran anschliessende Sendesequenz wird über den Wert der im Datenspeicher (14) gespeicherten individuellen Codenummer und eines gegebenenfalls daran angehängten digitalen Datenwortes bestimmt.

In Bild 2 ist der Aufbau einer Sendesequenz dargestellt, die einen 16 Bit langen Identifizierungscode (C15 - C1) sowie ein daran angehängtes 8-bit-Datensignal (D7 - D0) beinhaltet. Über das Datenwort können gegebenenfalls noch weitere Informationen über den Zustand des Wechselrichters übermittelt werden.

| C15 | C14 | C13 | C12 | C11 | C10 | C9 | C8 | C7 | C6 | C5 | C4 | C3 | C2 | C1 | C0 | D7 | D6 | D5 | D4 | D3 | D2 | D1 | D0 |
|-----|-----|-----|-----|-----|-----|----|----|----|----|----|----|----|----|----|----|----|----|----|----|----|----|----|----|
| MSB | | | | | | | | | | | | | | | | MSB | | | | | | | |

Bild 2: Aufbau einer Sendesequenz (Datenwortbreite 8 Bit)

Zur Erhöhung der Übertragungssicherheit wird eine sogenannte Codespreizung vorgenommen. Jedes einzelne Bit wird hierzu in 7 Chips gemäss Bild 3 aufgeteilt.

| 0 | 1 | 0 | 0 | 1 | 1 | 0 |
|---|---|---|---|---|---|---|

entspricht logischer "1"

| 1 | 0 | 1 | 1 | 0 | 0 | 1 |
|---|---|---|---|---|---|---|

entspricht logischer "0"

Bild 3: Aufteilung eines Bits in 7 Chips

Bedingt durch die Codespreizung kann eine logische Null bzw. eine Eins eindeutig von einer Sendepause unterschieden werden.

Zur Übertragung der Sendesequenz wird jedes Bit bzw. jeder Chip für die Dauer einer Grundschwingung übertragen, indem bei einer "1" die Oberwelle der Grundschwingung aufmoduliert und bei einer "0" diese unterdrückt wird. Die Übertragung eines Chips in einem mit 50 Hz schwingenden Wechselstromnetz dauert dann genau eine Netzperiode, also 20 ms.

Das normierte Steuersignal wird mit einer Grösse für den Stromsollwert multipliziert. Die Grösse für den Stromsollwert wird über einen sogenannten MPP-Tracker (20) und einen Spannungsregler (21) in Abhängigkeit von der am Ausgang des photovoltaischen Moduls (4) abgreifbaren Leistung bestimmt. Der MPP-Tracker (20) bestimmt auf der Basis des am Ausgang des photovoltaischen Moduls (4) anliegenden Spannung und des abfliessenden Stroms eine für den jeweiligen Betriebszustand des photovoltaischen Moduls (4) optimale Betriebsspannung. Diese optimale Betriebsspannung wird mit der am Ausgang des photovoltaischen Moduls (4) anliegenden Ist-Spannung verglichen, wobei ein Spannungsregler (21) aus dem Differenzwert aus optimaler Betriebsspannung und Ist-Spannung den für den optimalen Betriebszustand des photovoltaischen Moduls (4) optimalen Stromwert bestimmt.

Aus der Differenz des mit dem normierten Steuersignal multiplizierten Stromsollwerts und einer Grösse für den Istwert des vom Wechselrichter (1) gelieferten Stroms, der am Ausgang des Wechselrichters abgegriffen wird, ergibt sich ein Stellwert.

Der Stellwert wird über einen Gleichrichter (17) gleichgerichtet, mittels eines Stromreglers (18) und eines Pulswellengenerators (19) aufbereitet und der ersten Treiberstufe (7) zugeleitet, mit der die erste Wechselrichterstufe (2) gesteuert wird.

Vorzugsweise wird die Signalstromsteuereinheit in einer kundenspezifischen integrierte Schaltung (ASIC) zur Steuerung und Regelung des Wechselrichters realisiert, die gleichzeitig die Signalaufbereitung für den Sender, also den Leistungsteil des Wechselrichters, beinhaltet.

Die Wechselrichter sollten mit einem eindeutigen Code kodiert werden. Diese Forderung ergibt sich daraus, dass sie nach dem Herstellungsprozess nicht mehr geöffnet werden sollen, damit nicht durch das Öffnen und Verschliessen des Wechselrichtergehäuses Feuchtigkeit eindringen kann. Im Ergebnis kann damit ein zukünftiger Betreiber die Codierung also nicht selbst ändern kann. Es muss demnach gewährleistet sein, dass dem Betreiber möglichst ausschliesslich Geräte mit unterschiedlichen Identifizierungscodes zur Verfügung stehen. Daher sollten mindestens so viele Codenummern vergeben werden können, dass jedes Gerät einer Jahresproduktion eine individuelle Nummer erhält. Bei einer Jahresproduktion von 10.000 bis 20.000 Stück ist ein 16-stellige Identifizierungscode mehr als ausreichend.

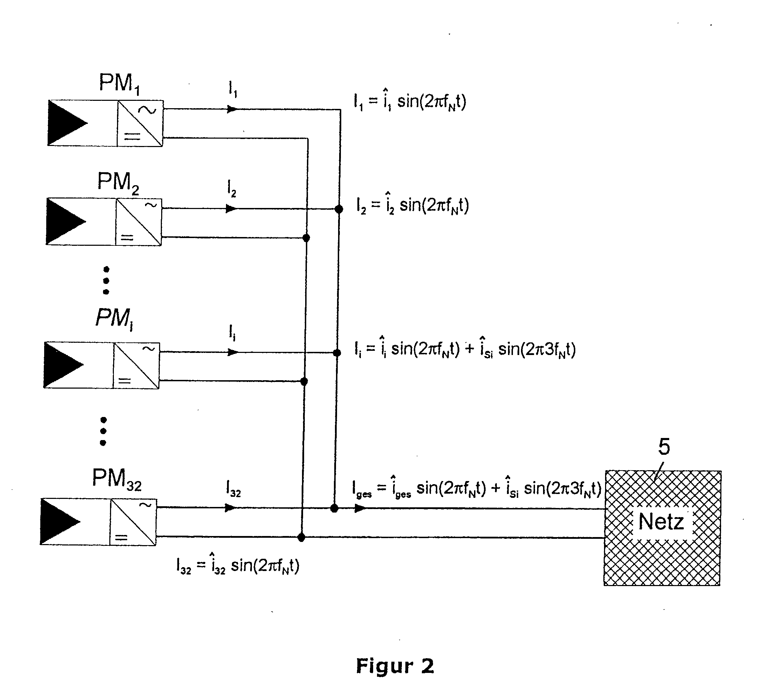

Figur 2 zeigt eine Vielzahl photovoltaischer Module $PM_1,..., PM_i,..., PM_{32}$, die jeweils einen Strom $I_1,..., I_i,..., I_{32}$ in das Wechselstromnetz einspeisen, wobei die Ausgänge der photovoltaischen Module parallel geschaltet sind. Bis auf das photovoltaische Modul $PM_i$ speisen alle photovoltaischen Module einen Wechselstrom in der Grundschwingung des Wechselstromnetzes mit dem zeitlichen Verlauf

$$I_j = \hat{\imath}_j \sin (2\pi f_N t)$$
$$f_N : \text{Netzfrequenz}$$
$$t : \text{Zeit}$$
$$i \in \{1 .. 32\}$$
$$j \in \{1, 2 ..., i-1, i+1, ..., 32\};$$

ein. Lediglich am Ausgang des photovoltaischen Moduls $PM_i$ ist dem Wechselstrom ein Signalstrom der Grundschwingung überlagert, so dass am Ausgang ein Wechselstrom mit dem zeitlichen Verlauf

$$I_i = \hat{\imath}_i \sin (2\pi f_N t) + \hat{\imath}_i \sin (2\pi 3 f_N t)$$

EP 1 227 599 A2

anliegt.

Die Ausgänge aller photovoltaischen Module sind parallel geschaltet, so dass sich ein Gesamtstrom mit dem zeitlichen Verlauf

$$I_{ges} = \hat{\imath}_{ges} \sin (2\pi f_N t) + \hat{\imath}_i \sin (2\pi 3 f_N t)$$

ergibt.

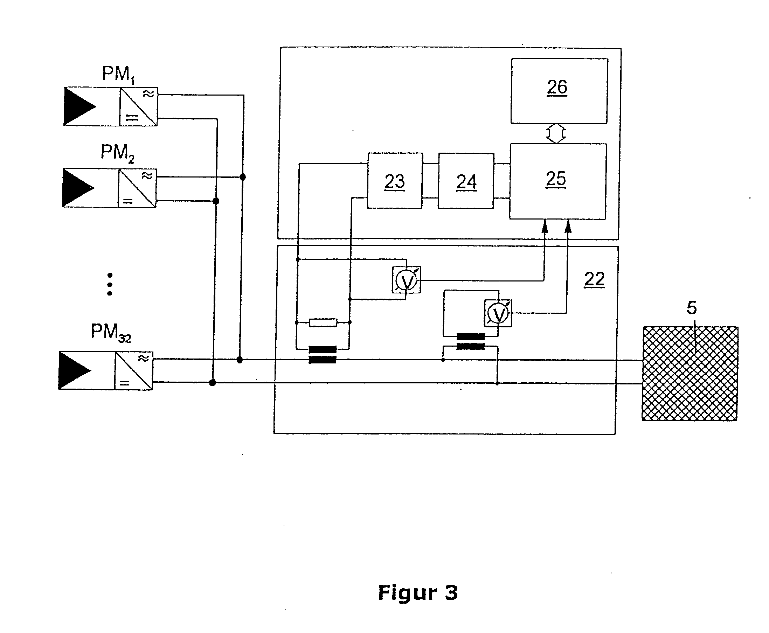

Damit der Gesamtstrom synchron zur Grundschwingung des Wechselstromnetzes (5) eingespeist werden kann, wird die zweite Wechselrichterstufe (3) über eine von der Synchronisationseinheit (8) gesteuerte zweite Treiberstufe (16) synchronisiert. Bevor dieser Gesamtstrom in das Wechselstromnetz eingespeist wird, wird die Oberwelle in einer Empfangseinheit, die in Figur 3 dargestellt ist, ausgelesen. Sie umfasst die Baugruppen einer Strommesseinrichtung (22), einer Verstärkereinheit (23), einer Filterbank (24) und einer Auswerteeinheit (25), die über ein Display und eine Tastatur (26) bedienbar ist.

Der detaillierte Aufbau von Strommesseinrichtung (22), der Verstärkereinheit (23), der Filterbank (24) und der Auswerteeinheit (25) ergeben sich aus ihrer Funktion und sind dem Fachmann hinreichend bekannt und werden daher im folgenden nicht näher erläutert.

Über die Tastatur und das Display kann der Anlagenzustand vollständig und effizient überwacht werden. Zunächst wird beim Erstbetrieb die aktuelle Uhrzeit und das Datum in die Auswerteeinheit (25) eingegeben. Nach einem über die Tastatur bewirkten Zurücksetzen (RESET) eines Registrierungsspeichers wird automatisch jeder neu empfangene Identifikationscode eines sendenden Wechselrichters darin registriert und nachfolgend überwacht. Als Beurteilungskriterium für die Funktionsfähigkeit wird das Datum des zuletzt eingegangenen Identifikationscodes des Wechselrichters gewählt. Verstreicht ein kompletter Tag ohne eine gültige Datenübertragung, so führt dies zu keinerlei Fehlermeldung und der Anlagenzustand wird als "gut" beurteilt. Liegt jedoch zwischen dem aktuellen Datum und dem Datum der letzten Meldung eines Wechselrichters ein Zeitraum von mehr als zwei Tagen, so wird ein Fehler auf dem Display angezeigt. Bei der Beurteilung des Anlagenzustandes können die Jahreszeit und die Witterung mit berücksichtigt werden. Zum Beispiel kann die Auswerteeinheit feststellen, ob an einem Tag für eine Dauer von beispielsweise mehr als 2 h eine Mindestleistung in das Wechselstromnetz eingespeist worden ist. Wenn ja, wird dieser Tag in der Bewertung des Anlagenzustandes berücksichtigt, wenn nein, wird er nicht berücksichtigt. Die Berücksichtigung von Jahreszeit und Witterung spielt insbesondere an den Orten eine besondere Rolle, an denen sich im Jahresverlauf die Sonneneinstrahlungsdauer erheblich verändert. So kann es sein, dass bei einer Einstrahlungsdauer von weniger als 2 h am Tag von einem Wechselrichter kein Signal empfangen wird, da der beschriebene Wechselrichter nur dann aktiv ist, wenn vom PV-Modul aufgrund ausreichender Sonneneinstrahlung ein ausreichender Strom erzeugt wird, und der Wechselrichter folglich nur zu dieser Zeit als Sender betrieben werden kann.

Das Beurteilungskriterium der Dauer von - als Beispiel - 2 h ergibt sich daraus, dass bei einer derartigen Steuerung die Signalsteuerungseinrichtungen so programmiert sind, dass genau einmal innerhalb einer Stunde zu einem zufälligen Zeitpunkt ein Signal gesendet wird. Somit gibt es innerhalb einer Dauer von 2 Stunden genau zwei Möglichkeiten, dass ein Signal von einem funktionierenden Wechselrichter fehlerfrei empfangen wird.

Ersetzt der Betreiber einen defekten Wechselrichter oder installiert er einen weiteren Wechselrichter bzw. ein zusätzliches photovoltaisches Modul, so muss lediglich einmal ein RESET zur Rücksetzung des Registrierungsspeichers durchgeführt werden, woraufhin alle in der Anlage zusammen gekoppelten Wechselrichter, und damit auch der neu installierte, erneut registriert werden.

## Patentansprüche

1. Verfahren zur Überwachung der Funktionsfähigkeit von an ein Wechselstromnetz (5) angekoppelten, einen Wechselrichter aufweisenden elektrischen Betriebsmitteln, insbesondere von einem oder mehreren dezentral angeordneten, einen Wechselrichter (1) aufweisenden photovoltaischen Modulen zur Einspeisung von Wechselstrom in ein Wechselstromnetz (5), wobei jeder Wechselrichter eine Signalstromsteuereinheit (6) aufweist und mit einer zentralen Empfangseinheit gekoppelt ist, mit den folgenden Schritten:

   a) in jedem Wechselrichter (1) wird in Abhängigkeit von der Signalstromsteuereinheit (6) innerhalb eines bestimmten Zeitraums mindestes einmal ein den Wechselrichter (1) identifizierender Signalstrom dem in das Wechselstromnetz (5) einzuspeisenden Wechselstrom überlagert;
   b) die Empfangseinheit filtert die Signalströme aus dem in das Wechselstromnetz (5) einzuspeisenden Wechselstrom heraus und überprüft, ob von jedem der an die Empfangseinheit gekoppelten Wechselrichter (1) innerhalb des bestimmten Zeitraums ein Signalstrom empfangen worden ist,

c) die Empfangseinheit zeigt einen vermutlichen Fehler eines der Wechselrichter (1) an, wenn nach Ablauf des bestimmten Zeitraums kein Signal von diesem Wechselrichter (1) empfangen worden ist.

**2.** Verfahren nach Anspruch 1, **dadurch gekennzeichnet, dass** der Signalstrom mit der Frequenz einer ungeraden Harmonischen der Grundschwingung des Wechselstromnetzes, insbesondere der dritten Harmonischen der Grundschwingung, dem in das Wechselstromnetz (5) einzuspeisenden Wechselstrom überlagert wird.

**3.** Verfahren nach Anspruch 1 oder 2, **dadurch gekennzeichnet, dass** der Signalstrom gleichgerichtet ist und in einer ersten Wechselrichterstufe (2) des Wechselrichters einem gepulsten Gleichstrom überlagert wird.

**4.** Verfahren nach einem der vorstehenden Ansprüche, **dadurch gekennzeichnet, dass** der Zeitpunkt zum Senden eines Signalstroms durch einen in der Signalstromsteuereinheit (6) vorgesehenen Zufallsgenerator (13) bestimmt wird.

**5.** Verfahren nach einem der vorstehenden Ansprüche, **dadurch gekennzeichnet, dass** mit dem Signalstrom ein digitales Signal serieller Daten abgebildet wird, indem der Signalstrom während der Dauer einer Grundschwingung entsprechend einer logischen 1 oder 0 entweder zu- oder abgeschaltet wird.

**6.** Verfahren nach Anspruch 5, **dadurch gekennzeichnet, dass** jedes zu übertragende Bit des digitalen Signals in mehrere, insbesondere sieben, Chips aufgespreizt wird, wobei die Übertragung eines Chips genau eine Periode der Grundschwingung des Wechselstromnetzes andauert.

**7.** Verfahren nach Anspruch 5 oder 6, **dadurch gekennzeichnet, dass** das digitale Signal einen für den Wechselrichter (1) spezifischen, digitalen Identifizierungscode sowie gegebenenfalls ein oder mehrere zusätzliche Datenwörter enthält.

**8.** Verfahren zur Datenübertragung in einem Wechselstromnetz von einem elektrischen Betriebsmittel mit einem Signalgeber an eine Auswerteeinheit, **dadurch gekennzeichnet, dass** das zu übertragende Signal als ganzzahlige Harmonische, insbesondere als 3. Harmonische, dem Wechselstrom überlagert wird.

**9.** Einrichtung mit an ein Wechselstromnetz (5) angekoppelten, einen Wechselrichter aufweisenden elektrischen Betriebsmitteln, insbesondere mit einem oder mehreren dezentral angeordneten, einen Wechselrichter (1) aufweisenden photovoltaischen Modulen zur Einspeisung von Wechselstrom in ein Wechselstromnetz (5), wobei jeder Wechselrichter eine Signalstromsteuereinheit (6) aufweist und mit einer zentralen Empfangseinheit gekoppelt ist zur Überwachung der Funktionsfähigkeit, wobei

a) in jedem Wechselrichter (1) Mittel vorgesehen sind, um in Abhängigkeit von der Signalstromsteuereinheit (6) innerhalb eines bestimmten Zeitraums mindestes einmal ein den Wechselrichter (1) identifizierender Signalstrom dem in das Wechselstromnetz (5) einzuspeisenden Wechselstrom zu überlagern;

b) die Empfangseinheit Mittel aufweist zum Herausfiltern der Signalströme aus dem in das Wechselstromnetz (5) einzuspeisenden Wechselstrom und zum Überprüfen, ob von jedem der an die Empfangseinheit gekoppelten Wechselrichter (1) innerhalb des bestimmten Zeitraums ein Signalstrom empfangen worden ist,

c) die Empfangseinheit Mittel zum Anzeigen eines vermutlichen Fehlers eines der Wechselrichter (1) aufweist, wenn nach Ablauf des bestimmten Zeitraums kein Signal von diesem Wechselrichter (1) empfangen worden ist.

**10.** Einrichtung nach Anspruch 9, **dadurch gekennzeichnet, dass** der Wechselrichter (1) so ausgebildet ist, dass der Signalstrom mit der Frequenz einer ungeraden Harmonischen der Grundschwingung des Wechselstromnetzes, insbesondere der dritten Harmonischen der Grundschwingung, dem in das Wechselstromnetz (5) einzuspeisenden Wechselstrom überlagert wird.

**11.** Einrichtung nach Anspruch 9 oder 10, **dadurch gekennzeichnet, dass** in einer ersten Wechselrichterstufe (2) des Wechselrichters Mittel vorgesehen sind, um den gleichgerichteten Signalstrom einem gepulsten Gleichstrom zu überlagern.

**12.** Einrichtung nach einem der Ansprüche 9 bis 11, **dadurch gekennzeichnet, dass** in der Signalstromsteuereinheit (6) ein Zufallsgenerator (13) vorgesehen ist, um den Zeitpunkt zum Senden eines Signalstroms zu bestimmen.

13. Einrichtung nach einem der Ansprüche 9 bis 12, **dadurch gekennzeichnet, dass** Schaltmittel vorgesehen sind, um mit dem Signalstrom ein digitales Signal serieller Daten abzubilden, indem der Signalstrom während der Dauer einer Grundschwingung entsprechend einer logischen 1 oder 0 entweder zu- oder abgeschaltet wird.

14. Einrichtung nach Anspruch 13, **dadurch gekennzeichnet, dass** Mittel vorgesehen sind, um jedes zu übertragende Bit des digitalen Signals in mehrere, insbesondere sieben, Chips aufzuspreizen, wobei die Übertragung eines Chips genau eine Periode der Grundschwingung des Wechselstromnetzes andauert.

15. Einrichtung nach Anspruch 13 oder 14, **dadurch gekennzeichnet, dass** Mittel vorgesehen sind, um dem digitalen Signal einen für den Wechselrichter (1) spezifischen, digitalen Identifizierungscode sowie gegebenenfalls ein oder mehrere zusätzliche Datenwörter beizufügen.

16. Wechselrichter für eine Einrichtung mit an ein Wechselstromnetz (5) angekoppelten, einen Wechselrichter aufweisenden elektrischen Betriebsmitteln, insbesondere mit einem oder mehreren dezentral angeordneten, einen Wechselrichter (1) aufweisenden photovoltaischen Modulen zur Einspeisung von Wechselstrom in ein Wechselstromnetz (5), mit einer Signalstromsteuereinheit (6) zur steuerungsmässigen Ankopplung an eine zentrale Empfangseinheit zur Überwachung der Funktionsfähigkeit, wobei im Wechselrichter (1) Mittel vorgesehen sind, um in Abhängigkeit von der Signalstromsteuereinheit (6) innerhalb eines bestimmten Zeitraums mindestes einmal einen den Wechselrichter (1) identifizierenden Signalstrom dem in das Wechselstromnetz (5) einzuspeisenden Wechselstrom zu überlagern.

17. Zentrale Empfangseinheit für eine Einrichtung mit an ein Wechselstromnetz (5) angekoppelten, einen Wechselrichter aufweisenden elektrischen Betriebsmitteln, insbesondere mit einem oder mehreren dezentral angeordneten, einen Wechselrichter (1) aufweisenden photovoltaischen Modulen zur Einspeisung von Wechselstrom in ein Wechselstromnetz (5), mit einer Signalstromsteuereinheit (6) zur steuerungsmässigen Ankopplung an die zentrale Empfangseinheit zur Überwachung der Funktionsfähigkeit, wobei

a) die Empfangseinheit Mittel aufweist zum Herausfiltern der Signalströme aus dem in das Wechselstromnetz (5) einzuspeisenden Wechselstrom und zum Überprüfen, ob von jedem der an die Empfangseinheit gekoppelten Wechselrichter (1) innerhalb des bestimmten Zeitraums ein Signalstrom empfangen worden ist,

b) die Empfangseinheit Mittel zum Anzeigen eines vermutlichen Fehlers eines der Wechselrichter (1) aufweist, wenn nach Ablauf des bestimmten Zeitraums kein Signal von diesem Wechselrichter (1) empfangen worden ist.

**Figur 1**

$I_1 = \hat{i}_1 \sin(2\pi f_N t)$

$I_2 = \hat{i}_2 \sin(2\pi f_N t)$

$I_i = \hat{i}_i \sin(2\pi f_N t) + \hat{i}_{si} \sin(2\pi 3 f_N t)$

$I_{ges} = \hat{i}_{ges} \sin(2\pi f_N t) + \hat{i}_{si} \sin(2\pi 3 f_N t)$

$I_{32} = \hat{i}_{32} \sin(2\pi f_N t)$

**Figur 2**

EP 1 227 599 A2

Figur 3